# EUROPEAN PATENT APPLICATION

(11) **EP 4 804 365 A1**
(43) Date of publication of application: **09.09.2026**
(21) Application number: 25162318.7
(22) Date of filing: 07.03.2025
(51) Int. Cl.: H02J 3/00, H02M 7/155, C25B 1/04, H02J 3/38

(54) **METHOD OF OPERATING AN ELECTROLYSIS SYSTEM, RECTIFIER CONTROL UNIT TO CONTROL AN ELECTROLYSIS SYSTEM, ELECTROLYSIS SYSTEM WITH SUCH A RECTIFIER CONTROL UNIT, COMPUTER PROGRAM PRODUCT AND A COMPUTER-READABLE STORAGE MEDIUM**

(71) Applicant: Siemens Energy Global GmbH & Co. KG, 81739 München (DE)
(72) Inventor: Loku, Fisnik, 90439 Nürnberg (DE); Dros, Arne, 91052 Erlangen (DE); Buratckii, Artem, 90459 Nürnberg (DE)

(57) **Abstract**

Method of operating an electrolysis system, rectifier control unit to control an electrolysis system, electrolysis system with such a rectifier control unit, computer program product and a computer-readable storage medium

Method of operating an electrolysis system (2) after a fault ride through, the method comprising the step of:
setting a firing angle (Alpha-ref) to a value less than 90° and/or choosing the firing angle (Alpha-ref) such that the result will be a measured DC current (Idc_meas) of the electrolysis system greater than a predetermined value (PV1), preferable zero.

## Description

Method of operating an electrolysis system, rectifier control unit to control an electrolysis system, electrolysis system with such a rectifier control unit, computer program product and a computer-readable storage medium.

The present disclosure in general relates to a method of operating an electrolysis system, a rectifier control unit to control such an electrolysis system, and an electrolysis system with such a rectifier control unit. Further, the present disclosure relates to a computer program product and a computer-readable storage medium.

Electrolysis is a process used for producing hydrogen by using electricity to split water into hydrogen and oxygen. Green hydrogen production, i.e., the production of hydrogen using renewable energy, such as electrical energy generated using wind turbines or photovoltaic systems, is increasing due to efforts to de-carbonize energy production. Therefore, the number of installed electrolysis systems connected to transmission networks for electrical energy, e.g., alternating current (AC) power grids, continuously increases. Some electrolysis systems are connected to renewable energy sources via medium voltage links.

Connecting large electrolysis systems to the public grid requires compliance with/the fulfilment of the local grid code requirements. Part of these requirements - especially for large electrolysis systems - is a fault ride through capability. The typical core requirement is to remain fully connected to the grid in case of a temporary voltage dip at the point of connection. The grid operator specifies a curve where the voltage dip is time dependently shown, during which the electrolysis system must remain connected. Longer or deeper voltage dips allow a disconnection of the electrolysis system.

Important for the grid operator is the availability of the load after the fault is cleared, so-called post-fault recovery behaviour. Should a large electrolysis system trip in case of short time disturbances within the grid, the grid operator would struggle to balance the power exchange between electrolysis system and network after fault clearance. The power electrolysis systems producing the power cannot be adjusted quick enough. Therefore, only a certain power is allowed to trip, and it is essential for large consumers to remain connected in case of a violation of the allowed voltage band.

Since the electrolysis characteristic is highly dependent on the input voltage, already a slight voltage reduction changes the input power strongly. If the cell voltage drops below the Nernst voltage (about 1.23 V for water electrolysis), the gas production and thus electrolysis process stops completely. Should the input voltage drop quickly to 0.73 p.u., no power can be consumed any more by the electrolysis system. This leads to massive imbalance between power generation and consumption, when several GW of electrolysis capacity are simultaneously affected, while the generation units continue to operate with just slightly reduced power compared to the pre-fault values.

Therefore, grid operators are requiring that the active power consumption of the electrolyser electrolysis system is returned to its pre-fault values in generally very short period of time, e.g., within 1 to 2 seconds range no matter what was the operating load before the fault which results in very high ramp-rates for power recovery after the fault (50%-100% /s). Utilizing the above-mentioned approach would lead to potential problems on the process side, e.g., a sudden increase in the gas production and subsequent gas pressure increase causing safety hazard for the electrolysis system operation and potential trip of the electrolyser electrolysis system, should only the rate of change of the DC current increase be modified in the rectifier controller units. This is mainly due to the reason, that even if the reference DC current (setpoint) for the electrolyser system would start to increase with a higher-than-normal ramp-up rate, the measured DC current would not be able to follow the reference for several seconds, and it would remain zero.

The operation of the electrolyser electrolysis system may therefore lead to scenarios where during a post-fault event, even though the reference DC current is ramping up with the pre-defined values, the measured DC current can have significantly higher ramp-up rates for a short period of time in order to catch up with reference DC current, which can lead to a sudden increase of the pressure on the gas production and as a result to the tripping of the electrolysis system, even for fault scenarios that are not considered as critical and therefore make electrolysis system not fault ride through capable.

It is therefore an objective of the present invention to improve the fault ride through capabilities of an electrolysis system.

This objective is solved by a method of operating an electrolysis system as stated in claim 1, a rectifier control unit to control an electrolysis system as stated in claim 5, an electrolysis system with such a rectifier control unit as stated in claim 9, a computer program product as stated in claim 10 and a computer-readable storage medium as stated in claim 11. Advantageous additional embodiments of the invention are disclosed in the respective dependent claims.

According to a first aspect of the invention, a method of operating an electrolysis system after a fault ride through comprise the step of:
setting a firing angle to a value less than 90° and/or choosing the firing angle such that the result will be a measured DC current of the electrolysis system greater than a predetermined value, preferable zero.

The firing angle is the angle at which a thyristor is fired, measured from the positive zero crossing of an AC voltage associated with this thyristor.

By setting a firing angle to a value less than 90° it is ensured that in post-fault scenarios a slow and pre-defined increase of the DC-current occurs. This way, it is ensured that the increase in the DC current along with the gas production on the process side is controlled and all the relevant parameters that can lead to a trip of the electrolysis system are within their limits.

Further, by choosing the firing angle such that the result will be a measured DC current of the electrolysis system greater than a predetermined value, preferable zero, not only one fixed value for the firing angle is chosen. That allow to dynamically update the required firing angle. Therefore, different measured parameters of the electrolysis system can be considered by a pre-controlled function of a rectifier control unit of the electrolysis system controlling the firing angle. Measured parameters can be input AC voltage value, residual DC voltage at the moment the fault is cleared, polarization curve of electrolysis system, protection settings of the rectifier controller etc. Based on those parameters, the pre-controlled function of the rectifier control unit determines an actual value of the firing angle. In such a way a measured DC current of the electrolysis system will greater than zero or greater that a predetermined value, for example close to zero. Also on this way, it is ensured that the increase in the DC current along with the gas production on the process side is controlled and all the relevant parameters that can lead to a trip of the electrolysis system are within their limits.

In an embodiment of the method, the method comprising the steps of:
read in the measured DC current;
comparing the measured DC current with a reference DC current;
if the difference between the measured DC current and the reference DC current is greater than a predetermined value providing at least one value for the reference DC current.

For example, a rectifier control unit of the electrolysis system carries out these steps. Accordingly, the rectifier control unit will freeze the actual value of the reference DC current in case the difference between the reference and the measured DC current becomes too high, e.g., higher that a pre-defined limit, for example 500 A. This predetermined value has to be designed and aligned with the valve controls of the electrolysis system to ensure that even if the measure DC current has to instantaneously increase for a specific value, e.g., step response, that the process side will not trip.

As soon as difference between the reference and the measured DC current becomes equal or less than a designed limit, the reference DC current will continue to increase with a pre-defined ramp-rate.

This way, scenarios can be handled in which the measured DC current cannot follow the reference DC current, for example in less than several hundreds of milliseconds.

In an embodiment of the method, the firing angle is set to a value between 60° and 30°, preferable between 50° and 40°. Such firing angles would result in an increasing measured DC current. Thus, the measured DC current would be able to follow the reference DC current.

In an embodiment of the method, the at least one value for the reference DC current is determined according to a predetermined ramp-up function. The ramp-up function provides at least one ramp-up rate for the reference DC current.

Thus, the predetermined value can up-dated depending on time and/or other measured parameters of the electrolysis system leading to a series of values forming a ramp-up function. Thus, the reference DC current will continue to increase with pre-defined ramp-rate.

According to a second aspect of the invention, a control rectifier control unit is provided. The rectifier control unit for an electrolysis system is configured to set a firing angle to a value less than 90° and/or to choose the firing angle such that the result will be a measured DC current of the electrolysis system greater than a predetermined value, preferable zero.

According to a third aspect of the invention, an electrolysis system with such a rectifier control unit is provided.

According to a fourth aspect of the invention, a computer program product comprises code portions that, when executed on a programmable apparatus, for example on rectifier control unit, enable the programmable apparatus to carry out steps of a method according to the first aspect of the invention. And according to a fifth aspect of the invention, a computer readable storage medium comprises a computer program product according to the second aspect of the invention.

The programmable apparatus may be a computer or a pro-cessing rectifier control unit comprising a processor and a memory and an interface for receiving measured values and parameter settings. The computer program product corresponds to a computer program, at least including software code portions for performing steps of the method according to the invention when run on a programmable apparatus, for enabling the programmable apparatus to per-form functions according to the invention. The computer program may be provided on a computer readable storage medium, i.e., a data carrier, such as a CD, DVD, memory card or other storage medium, stored with data loadable in a memory of the programmable apparatus, wherein the data represents the computer program. As another example, the data carrier may further be a data connection, such as a telephone cable or data cable or a wireless connection.

While not explicitly described, the presented embodiments may be employed in any combination or sub-combination.

The properties, features, and advantages of the invention described above, and the manner in which they are achieved, will become clearer and more clearly understood in connection with the following description of the exemplary embodiments, which are explained in more detail in connection with the drawings, wherein
Fig. 1 schematically illustrates an example of an electrolysis system;
Fig. 2 schematically shows diagrams illustrating fault ride through requirements;
Fig. 3 schematically shows a diagram illustrating an electrolyser polarisation curve;
Fig. 4 schematically shows a diagram illustrating a rectifier control unit;
Fig. 5 schematically shows an example fault case; and
Fig. 6. schematically shows an example of a flowchart of operating the electrolysis system shown in Fig. 1.

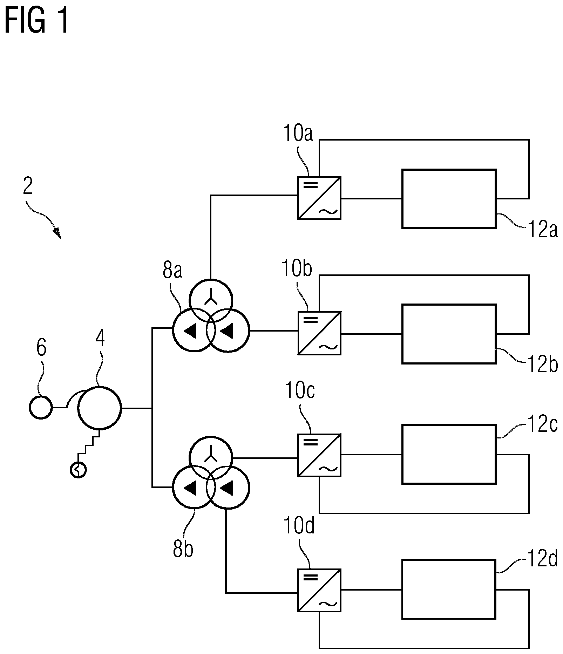

In Fig.1, an example of an electrolysis system 2 is schematically illustrated.

The shown electrolysis system 2 is a 24-pulse electrolysis system and contains an autotransformer 4 with an on-load tap changer.

A PoC 6 connects the electrolysis system 2 to an AC grid (not shown) .

The autotransformer 4 secondary side is connected to primary sides of two rectifier transformers 8a, 8b, having their secondary sides connected to the AC input sides of four 6-pulse thyristor rectifier circuits 10a, 10b, 10c, 10d, which connect with their DC output sides to four electrolyser rows 12a, 12b, 12c, 12d, i.e., four parallel rows of electrolyser cell modules. The electrolyser cell modules can be PEM or alkaline cell modules.

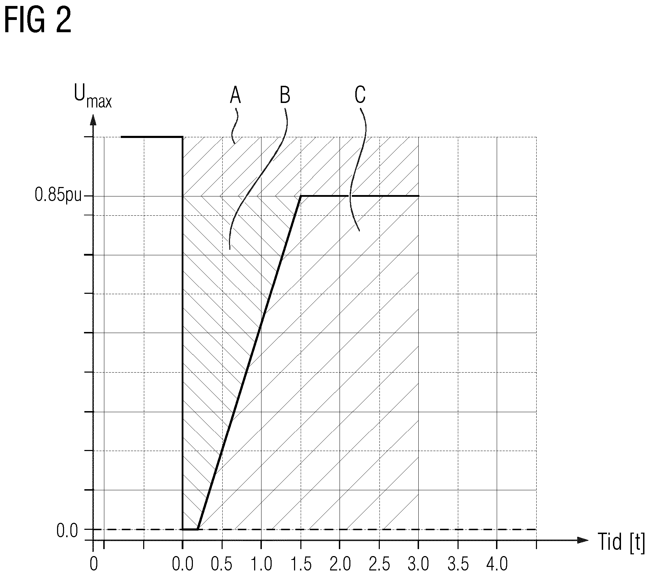

In Fig. 2, a diagram illustrates fault ride through requirements.

Connecting large electrolysis systems 2 to the public grid requires compliance with/the fulfilment of the local grid code requirements. Part of these requirements - especially for large electrolysis systems - is a fault ride through capability. The typical core requirement is to remain fully connected to the grid in case of a temporary voltage dip at the point of connection. The grid operator specifies a curve where the voltage dip is time dependently shown, during which the electrolysis system must remain connected (Area A + B). Longer or deeper voltage dips allow a disconnection of the electrolysis system (Area C). Similar requirements apply for temporary voltage increases.

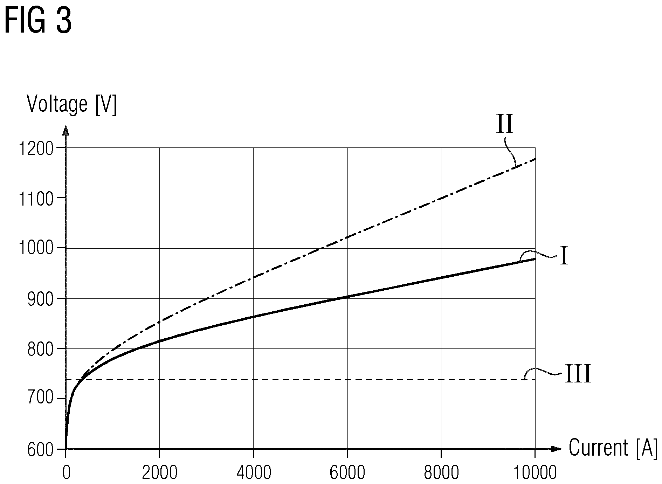

In Fig. 3, a diagram illustrating an electrolyser polarisation curve is schematically shown. A first polarisation curve I shows the polarisation curve of an example electrolyser row 12a, 12b, 12c, 12d for a new electrolyser row 12a, 12b, 12c, 12d, i.e., at its beginning of life. A second polarisation curve II shows the polarisation curve of the same example electrolyser row 12a, 12b, 12c, 12d at the end of its life. At any time during the lifetime of the electrolyser row12a, 12b, 12c, 12d, a lower limit or minimum threshold for hydrogen production III applies.

Since the electrolysis characteristic is highly dependent on the input voltage, already a slight voltage reduction changes the input power strongly. If the cell voltage drops below the Nernst voltage (about 1.23 V for water electrolysis), the gas production and thus electrolysis process stops completely. For the example below, nominal electrolyser system voltage at begin of life is at about 980 V, while the threshold for hydrogen production is in the range of 720 V. Should the input voltage drop quickly to 0.73 piu., no power can be consumed any more by the electrolysis system. This leads to massive imbalance between power generation and consumption, when several GW of electrolysis capacity are simultaneously affected, while the generation units continue to operate with just slightly reduced power compared to the pre-fault values.

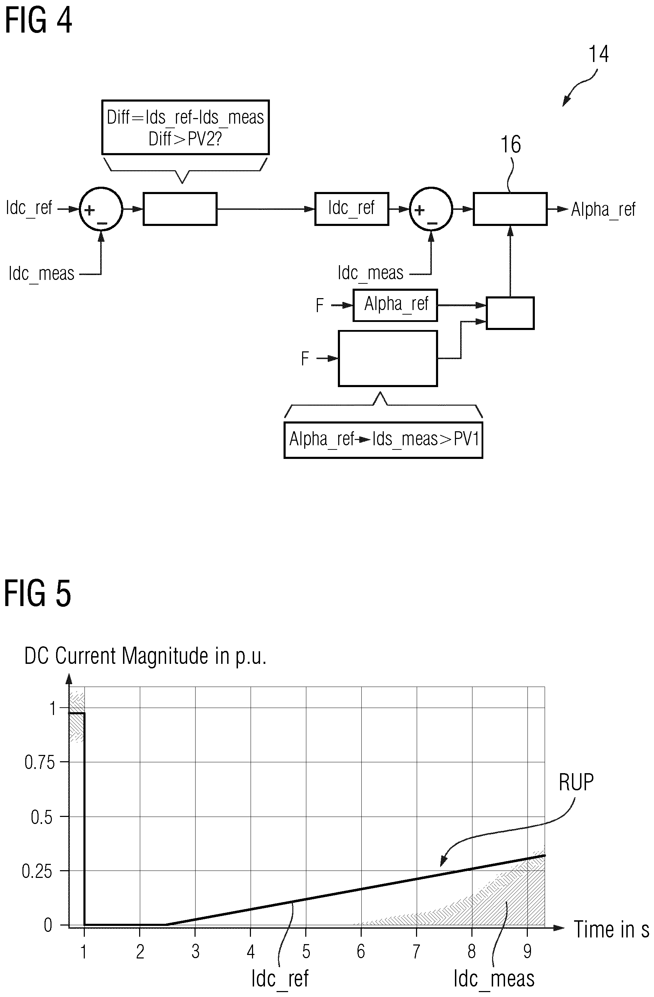

In Fig. 4, a diagram illustrates a rectifier control unit 14 for an electrolyser system 2 to improve the fault ride through capabilities of the electrolysis system 2.

The rectifier control unit 14 can comprise hardware components and/or software components, which are configured to carry out the following described functions.

According to a first embodiment, the rectifier control unit 14 is configured to set a firing angle Alpha-ref to a value less than 90° after the rectifier control unit 14 received a fault signal F after a fault ride through. For example, the rectifier control unit 14 can set the firing angle Alpha-ref to a value between 60° and 30°, preferable between 50° and 40°. In the present embodiment the firing angle Alpha-ref is set to 45°.

According to a second embodiment, the rectifier control unit 14 is configured to choose the firing angle Alpha-ref such that the result will be a measured DC current Ids_meas of the electrolysis system 2 greater than a predetermined value PV1 after the rectifier control unit 14 received a fault signal F after a fault ride through. In the present example, the predetermined value PV1 is zero.

Regarding both embodiments, the set or chosen firing angle Alpha-ref will be transmitted to a controller 16, for example to a PI-controller in the present example, in order to control thyristors (not shown) of the thyristor rectifier circuit 10a, 10b, 10c, 10d.

Further, regarding both embodiments, the rectifier control unit 14 is configured to read in the measured DC current Idc_meas. Moreover, the rectifier control unit 14 is configured to compare the measured DC current Idc_meas with a reference DC current Idc_ref. In the present embodiment, the rectifier control unit 14 determines the difference Diff between the measured DC current Idc_meas and the reference DC current Idc_ref. If the difference Diff between the measured DC current Idc_meas and the reference DC current Idc_ref is greater than a predetermined value PV2, the rectifier control unit 14 provides at least one value for the reference DC current Idc ref. Further, the rectifier control unit 14 can be configured to determine the at least one value for the reference DC current Idc_ref according to a predetermined ramp-up function RUP (see Fig. 5).

In Fig. 5, a diagram shows such a predetermined ramp-up function RUP.

The predetermined ramp-up function RUP for the reference DC current Idc_ref is in the present example form 0 s to 2.5 s zero, and starts to increase after 2,5 s with a constant slope, like a straight line with a constant gradient. However, in alternative embodiments the predetermined ramp-up function RUP for the reference DC current Idc_ref can have different shapes, like an exponential shape, or only one or more than two a straight lines, each with constant gradients.

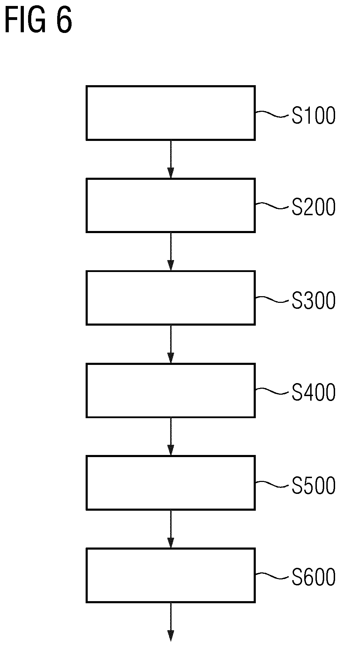

In Fig. 6, an example of a flowchart of operating the electrolysis system 2 shown.

The method starts with step S100, in which after a fault ride through a fault signal F is provided, for example by the rectifier control unit 14 or other components of the electrolysis system 2.

In the nest step S200, according to the first embodiment, for example the rectifier control unit 14 sets the firing angle Alpha-ref to a value less than 90°. In the present example, the firing angle Alpha-ref will set to 45°. In others embodiments the firing angle Alpha-ref can be set to values between 60° and 30°, preferable between 50° and 40°.

Alternatively, according to the second embodiment, for example the rectifier control unit 14 chose the firing angle Alpha-ref such that the result will be the measured DC current Idc_meas of the electrolysis system 2 greater than a predetermined value PV1, for example zero.

In the next step S300, for example the rectifier control unit 14 reads in the measured DC current Idc_meas.

In the next step S400, for example the rectifier control unit 14 compares the measured DC current Idc_meas with the reference DC current Idc_ref.

In the next step S500, for example the rectifier control unit 14 determines the difference Diff between the measured current Idc_meas and the reference DC current Idc_ref. If the difference Diff between the measured current Idc_meas and the reference DC current Idc_ref is greater than a predetermined value PV2, for example the rectifier control unit 14 provides at least one value for the reference DC current Idc ref. In present example, the at least one value for the reference DC current Idc_ref is determined according to the predetermined ramp-up function RUP.

In the next step S600, for example the rectifier control unit 14 returns to normal operation as the difference Diff between the measured DC current Idc_meas and the reference DC current Idc_ref is equal or smaller than a predetermined value PV2.

Those skilled in the art will recognize that the boundaries between blocks are merely illustrative and that alternative embodiments may merge blocks or impose an alternative composition of functionality upon various blocks. It should be noted that, depending on the embodiment, method steps, although described and illustrated according to a certain sequence or order of steps, may at least partly be carried out in a different order or simultaneously. Other steps may be added and certain steps de-scribed here may be left out.

Although the invention has been illustrated and described in detail by the shown preferred embodiments, the invention is not limited by the disclosed examples and other variations can be derived therefrom by those skilled in the art without departing from the scope of the invention.

## Claims

1. Method of operating an electrolysis system (2) after a fault ride through, the method comprising the step of: (S200) setting a firing angle (Alpha-ref) to a value less than 90° and/or choosing the firing angle (Alpha-ref) such that the result will be a measured DC current (Idc_meas) of the electrolysis system (2) greater than a predetermined value (PV1), preferable zero.

2. The method as claimed in claim 1, wherein the method comprising the steps of:
(S300) read in the measured DC current (Idc_meas);
(S400) comparing the measured DC current (Idc_meas) with a reference DC current (Idc_ref);
(S500) if the difference (Diff) between the measured DC current (Idc_meas) and the reference DC current (Idc_ref) is greater than a predetermined value (PV2) providing at least one value for the reference DC current (Idc_ref).

3. The method as claimed in claim 1 or 2, wherein the firing angle (Alpha-ref) is set to a value between 60° and 30°, preferable between 50° and 40°.

4. The method as claimed in any of the preceding claims, wherein the at least one value for the reference DC current (Idc_ref) is determined according to a predetermined ramp-up function (RUP).

5. Rectifier control unit (14) for an electrolysis system (2), wherein the rectifier control unit (14) is configured to set a firing angle (Alpha-ref) to a value less than 90° and/or to choose the firing angle (Alpha-ref) such that the result will be a measured DC current (Idc_meas) of the electrolysis system (2) greater than a predetermined value (PV1), preferable zero.

6. Rectifier control unit (14) as claimed in claim 5, wherein the rectifier control unit (14) is configured to read in a measured DC current (Idc_meas); to compare the measured DC current (Idc_meas) with a reference DC current (Idc_ref); and if the difference (Diff) between the measured DC current (Idc_meas) and the reference DC current (Idc_ref) is greater than a predetermined value (PV2) to provide at least one value for the reference DC current (Idc_ref).

7. Rectifier control unit (14) as claimed in claim 5 or 6, wherein the rectifier control unit (14) is configured to set the firing angle (Alpha-ref) to a value between 60° and 30°, preferable between 50° and 40°.

8. Rectifier control unit (14) as claimed in any of the claims 5 to 7, wherein the rectifier control unit (14) is configured to determine the at least one value for the reference DC current (Idc_ref) according to a predetermined ramp-up function (RUP).

9. Electrolysis system (2) with a rectifier control unit (14) as claimed in any of the claims 5 to 8.

10. Computer program product, comprising code portions that, when executed on a programmable apparatus, enable the control rectifier control unit (14) to carry out steps of a method according to any of the claims 1 to 4.

11. Computer readable storage medium, comprising a computer program product according to claim 10.
